Europäisches Patentamt

European Patent Office

Office européen des brevets

(19)

(11) **EP 0 587 710 B1**

# (12) FASCICULE DE BREVET EUROPEEN

(45) Date de publication et mention
de la délivrance du brevet:
**27.12.1996 Bulletin 1996/52**

(21) Numéro de dépôt: **92912267.9**

(22) Date de dépôt: **12.06.1992**

(51) Int Cl.6: **H01M 10/28**, H01M 10/04,
H01M 2/12, H01M 4/24,
H01M 4/80

(86) Numéro de dépôt international:
**PCT/FR92/00528**

(87) Numéro de publication internationale:
**WO 92/22936 (23.12.1992 Gazette 1992/32)**

## (54) ACCUMULATEUR ALCALIN A ELECTRODES BIPOLAIRES ET PROCEDES DE FABRICATION

ALKALI-AKKUMULATOR MIT BIPOLARER ELEKTRODE UND VERFAHREN ZU DESSEN
HERSTELLUNG

ALKALINE ACCUMULATOR WITH BIPOLAR ELECTRODES AND METHOD OF FABRICATION

(84) Etats contractants désignés:
**AT BE CH DE DK ES FR GB GR IT LI LU MC NL SE**

(30) Priorité: **13.06.1991 FR 9107491**
**26.03.1992 FR 9203927**

(43) Date de publication de la demande:
**23.03.1994 Bulletin 1994/12**

(73) Titulaire: **LABORATOIRES SORAPEC**
**94120 Fontenay-sous-Bois (FR)**

(72) Inventeurs:
- **BRONOEL, Guy**
  **F-78000 Versailles (FR)**
- **BUGNET, Bernard**
  **F-01630 Saint-Genis-Pouilly (FR)**
- **BESSE, Serge**
  **F-94200 Ivry-sur-Seine (FR)**
- **TASSIN, Noelle**
  **F-94120 Fontenay-sous-Bois (FR)**

(74) Mandataire: **Leszczynski, André et al**
**NONY & ASSOCIES**
**29, rue Cambacérès**
**75008 Paris (FR)**

(56) Documents cités:
**EP-A- 0 032 291**      **EP-A- 0 384 945**
**DE-A- 2 706 310**      **DE-A- 2 907 262**
**DE-A- 3 739 735**      **DE-A- 3 907 741**
**DE-A- 3 916 050**      **FR-A- 2 304 188**
**US-A- 4 125 680**      **US-A- 4 267 243**
**US-A- 4 687 553**

- **PATENT ABSTRACTS OF JAPAN vol. 11, no. 254
  (E-533)(2701) 18 Août 1987**
- **PROCEEDINGS OF THE 34th INTERNATL.
  POWER SOURCES SYMPOSIUM, 25-28 juin
  1990, Cherry Hill, NJ (US); D.I. Britton, pp.
  235-238**
- **CHEMICAL ABSTRACTS, vol. 114, no. 18, 06 mai
  1991, Columbus, OH (US); p. 214, Abstract no.
  167864u**

EP 0 587 710 B1

## Description

La présente invention se rapporte à un accumulateur alcalin à électrodes bipolaires, notamment à un accumulateur nickel-cadmium ou nickel-hydrures, et à des procédés de fabrication d'un tel accumulateur.

La mise en série électrique de cellules électrochimiques pour constituer une batterie d'accumulateurs s'effectue généralement par raccordement de l'ensemble des têtes de plaques des électrodes d'une polarité à l'ensemble des têtes de plaques des électrodes de polarité opposée située dans l'élément contigu.

Ce raccordement peut être réalisé, soit extérieurement au boîtier de chaque élément, soit suivant un mode plus avantageux, qui minimise la longueur du raccordement, donc les pertes ohmiques, à travers la cloison séparant deux éléments contigus.

Il est remarquable d'observer que pour des cellules électrochimiques constituant des électrolyseurs ou des générateurs non conventionnels, comme les piles à combustible, dans le cas où les tensions de l'ensemble du système sont élevées (> 20 V), la mise en série des cellules est souvent réalisée par une collecte dite frontale, les électrodes bipolaires formant la cloison séparatrice entre deux éléments. Cette disposition permet un drainage homogène des charges et évite de recourir à des connexions entre les électrodes.

Il serait intéressant d'appliquer ce principe bien connu de collecte par électrodes bipolaires au cas des batteries à électrolyte alcalin et notamment au cas des accumulateurs nickel-cadmium ou nickel-hydrures. Toutefois, pour ce type de générateur, les problèmes à résoudre dans le cas d'une collecte bipolaire tiennent, d'une part au fait que les matières actives doivent, pour l'obtention d'un rendement faradique maximum, être incorporées dans un réseau conducteur tridimensionnel et, d'autre part, à la qualité de la liaison à réaliser entre les collecteurs tridimensionnels précités et la paroi conductrice bipolaire. Par ailleurs, l'obtention de caractéristiques massiques élevées impose que soient minimisées les masses des collecteurs tridimensionnels et du collecteur bipolaire. Enfin, pour l'obtention d'un coût de fabrication le plus bas possible, il conviendrait que l'électrode bipolaire puisse être fabriquée suivant un processus simple.

C'est précisément le but de l'invention que d'apporter une solution aux contraintes posées ci-dessus, en prenant en compte des paramètres parfois contradictoires.

L'invention est relative à une électrode bipolaire pour accumulateur alcalin présentant les caractéristiques figurant dans le préambule de la revendication 1. L'invention se rapporte notamment mais non exclusivement à un accumulateur nickel-cadmium ou nickel-hydrures, dans lequel la mise en série des éléments est assurée par les cloisons conductrices des électrodes bipolaires sur chaque face desquels est de préférence plaquée une structure tridimensionnelle en mousse ou feutre de nickel assurant la collecte des charges et la rétention des matières actives qui la remplissent.

Par "mousse" ou "feutre" de nickel, on entend désigner dans la suite de l'exposé une structure présentant de nombreux espaces interstitiels, réalisée en nickel proprement dit ou dans un alliage riche en nickel. Une mousse présente une structure alvéolaire réticulée, tandis qu'un feutre est en enchevêtrement de fibres.

De préférence et afin de minimiser la masse de la cloison de l'électrode bipolaire, celle-ci est constituée d'une feuille ou d'un feuillard mince, par exemple d'épaisseur comprise entre 20 et 200 microns avantageusement de 50 microns environ, en nickel ou en acier doux nickelé sur ses deux faces.

Du point de vue de la conduction électronique, l'épaisseur de la cloison conductrice devrait être avantageusement la plus mince possible, pourvu qu'elle assure une étanchéité correcte entre les électrolytes situés dans les éléments qu'elle sépare. Dans la réalité, l'épaisseur choisie sera imposée par, d'une part, les contraintes liées à sa manutention et aux différentes opérations dont il sera l'objet dans le processus de fabrication de l'ensemble de l'électrode bipolaire et, d'autre part, par le coût excessif que peut avoir une membrane très mince.

La masse de nickel constituant le réseau des mousses ou feutres plaqués sur la cloison peut être abaissée à des valeurs très faibles compte-tenu du mode de collecte frontale assurée par ce système bipolaire. A l'inverse, dans les montages conventionnels pour des électrodes notamment de grande dimension (S > 1 dm$^2$), la masse surfacique des mousses ou feutres employées doit être supérieure à une valeur minimum de 400 g/m$^2$ et généralement de l'ordre de 500 g/m$^2$ pour que les chutes ohmiques dans la mousse ou le feutre deviennent négligeables.

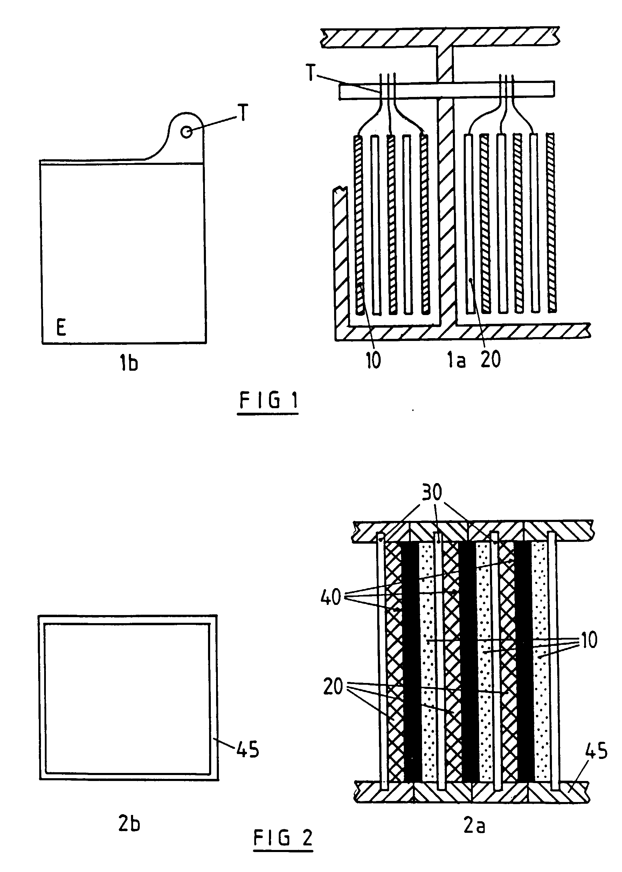

Les figures 1 et 2, cette dernière étant décrite plus en détail par la suite, illustrent la différence entre le drainage traditionnel des charges et la collecte frontale. Dans le cas de la collecte traditionnelle, les charges développées dans toutes les zones de l'électrode doivent parvenir au point de connexion T sur la tête de plaque. Ainsi, les charges mises en jeu dans la zone E de l'électrode ont à parcourir une distance très importante (par exemple 20 cm). En revanche, dans le cas de la collecte frontale, tous les points de l'électrode voient leurs charges affectées des mêmes longueurs de parcours, qui sont de l'ordre de l'épaisseur de l'électrode, soit généralement de 0,3 à 3 mm, typiquement 1 mm. De plus, la collecte étant répartie sur toute la surface de l'électrode, il n'a y pas d'accumulation des charges en partie haute. En ce qui concerne la conduction, la masse surfacique du collecteur électronique pourrait être abaissée sans inconvénient à une valeur de 0,2 g/m$^2$. En fait, là encore, ce sont les caractéristiques mécaniques demandées au collecteur mousse ou feutre qui imposent des valeurs plus élevées de sa masse. Une solution avantageuse, du point de vue de la réduction des masses, pourrait consister dans l'emploi de mousses dont l'armature interne serait constituée d'un polymère stable dans les conditions de fonctionnement de l'électrode (polypropylène, polyéthers...) revêtue superficiellement d'une mince couche de nickel. Cette solution ne s'est cependant pas avérée comme la plus judicieuse compte-tenu des difficultés à réaliser ensuite une bonne liaison électrique entre la mousse et la paroi bipolaire.

Dans ces conditions, il est retenu de préférence des mousses ou feutres de nickel ayant une masse surfacique comprise entre 20 et 300 g/m², avantageusement entre 50 et 250 g/m², et une épaisseur comprise entre 0,5 et 5 mm.

Le diamètre des pores est choisi en fonction du mode d'introduction de la matière active dans les alvéoles, de la viscosité de la matière active (dans le cas d'un empâtage mécanique) et de la conductivité intrinsèque de la masse active. Concernant ce dernier point, les alvéoles peuvent être avantageusement plus grandes pour la masse négative (dont la conductivité est meilleure que celle de la positive), que pour la masse positive. Dans la quasi totalité des cas, le diamètre moyen des pores dans le cas d'une mousse est compris entre 0,5 mm et 0,2 mm (mousses ppi 45 à ppi 100).

A priori, le recours à une structure qui à la fois collecte les charges et retient les matières actives ne s'imposerait pas si l'épaisseur des matières actives plaquées sur la cloison était faible (quelques dixièmes de mm). Toutefois, on a constaté que dans ce cas les gains en masse par rapport au mode traditionnel de collecte seraient inexistants si ce n'est négatif, la masse de paroi bipolaire étant du même ordre de grandeur ou supérieure à la masse des matières actives qui lui sont associées. On recommande donc, selon un mode d'exécution avantageux, la réalisation d'électrodes bipolaires dont la capacité surfacique effective est supérieure à 30 mAh/cm², par exemple de l'ordre de 40 mAh/cm². Pour des capacités surfaciques supérieures à 60 mAh/cm² en effet, on peut observer, lorsque la porosité des électrodes n'est pas très importante, une diminution du rendement faradique moyen sur les matières actives due à un gradient trop important du potentiel local pris dans l'électrolyte imbibant la porosité des électrodes.

Dans le cas d'une mousse, pour une capacité surfacique de l'ordre de 40 mAh/cm², l'épaisseur initiale de la mousse de nickel avant empâtage est de préférence comprise entre 2 et 2,5 mm.

Il convient d'observer ici que la réalisation de batteries constituées d'électrodes bipolaires, couples Ni-Cd ou Ni-hydrures par exemple, pose plusieurs problèmes qui pour certains sont relatifs à la cloison de l'électrode bipolaire ou à sa mise en oeuvre. La cloison de l'électrode bipolaire est conductrice électroniquement, puisqu'elle porte les électrodes comme indiqué plus haut, mais elle assure aussi l'étanchéité entre deux éléments successifs.

Un premier problème est relatif aux différences de pression qui peuvent apparaître lors du fonctionnement entre des éléments différents, lorsque ceux-ci constituent une batterie dite étanche. Ces différences peuvent être dues entre autre à l'existence de gradients thermiques, inévitables entre des éléments proches des plaques d'extrémités fermant l'empilement d'une part, et ceux proches du coeur de l'empilement d'autre part. Ces différences peuvent également être dues à des capacités électriques différentes pour des électrodes situées dans des éléments différents. Par ailleurs, si une surpression excessive vient à se produire dans un élément, il convient que par sécurité cette pression ne puisse dépasser un seuil préalablement défini. On peut dans ce cas imaginer que chaque élément comporte une valve de sécurité. Toutefois, l'épaisseur d'un élément étant faible, par exemple entre 2,5 et 3,5 mm, la réalisation d'une valve de très petite dimension est difficile, donc onéreuse.

Un deuxième problème a trait aux marges des cloisons des électrodes bipolaires, là où est fixée la structure isolante séparant un élément d'un autre. En effet, un des moyens envisageables pour assurer l'étanchéité entre les éléments consiste à surmouler sur tout le périmètre de chaque cloison bipolaire une structure en polymère. Ce polymère devra être un isolant électrique et être stable dans les conditions d'emploi, c'est-à-dire dans la gamme de température et de sollicitations mécaniques à laquelle il peut être soumis et en présence de l'électrolyte utilisé. L'étanchéité entre deux éléments implique bien sûr que soit assurée une bonne adhérence entre le polymère et la cloison conductrice, mais aussi que la liaison entre les structures polymères de deux éléments voisins soit étanche, cette liaison pouvant être assurée par soudure, par exemple par fusion locale du polymère.

Il faut par ailleurs noter que la cloison conductrice est, pour des raisons évidentes d'allégement du générateur, généralement très mince, comme cela a été mentionné plus haut. Un des incidents qui peut survenir, dommageable pour la batterie, résulte de ce que l'élévation de la pression interne dans un élément, associée à une élévation de température, peut provoquer par poussée sur le bord interne de la structure polymère son décollement par rapport à la cloison conductrice.

Selon l'invention, l'électrode bipolaire comporte une cloison conductrice, qui est percée, sur une partie libre de matières actives, d'au moins un orifice permettant la mise en communication par l'environnement gazeux des éléments assemblés en série, cet orifice ne permettant pas le passage éventuel de l'électrolyte d'un élément dans l'autre.

Par "partie libre de matières actives", on entend désigner dans la suite de l'exposé, la partie de la cloison qui n'est pas recouverte par les électrodes et qui, évidemment, ne doit pas faire partie de la bordure ou des marges, c'est-à-dire de la zone qui sert à maintenir en place l'électrode bipolaire à l'intérieur de la batterie d'accumulateurs et qui va se trouver noyée dans la structure isolante. Typiquement, pour une batterie alcaline, la partie libre en question a une largeur comprise entre 5 et 30 mm, valeur qui est notamment fonction de la capacité de l'élément et du régime de charge. Ces deux facteurs définissent en effet le volume "mort" qui doit exister dans chaque élément pour que les pressions internes n'atteignent pas une valeur excessive.

En d'autres termes, il est ménagé un ou plusieurs petits orifices dans la cloison conductrice de façon à égaliser les pressions. Sa dimension doit être telle que pour un débit maximum de gaz produit en fin de charge dans un élément, il n'en résulte pas une variation de pression entre cet élément et ses plus proches. De préférence, le nombre d'orifices est compris entre un et quatre.

Dans la mesure où tous les éléments communiquent entre eux, une surpression éventuelle dans un élément ne conduit normalement pas à une pression excessive dans l'ensemble de l'empilement. Néanmoins, si la pression dans l'ensemble des éléments venait à dépasser une pression limite de consigne, on prévoira avantageusement une ou plusieurs valves de sécurité qui s'ouvriront pour relâcher la pression. Ces valves ne seront plus situées nécessairement sur les éléments eux-mêmes, mais de préférence sur les plaques d'extrémités.

Il convient cependant d'éviter le risque de shunter par l'électrolyte les éléments consécutifs, au travers des orifices de mise en communication des éléments. Il faut remarquer que, selon le principe même lors du fonctionnement des éléments étanches, il n'y a normalement pas d'électrolyte libre dans les volumes des éléments non remplis par les électrodes et le séparateur situé entre les électrodes ; l'électrolyte est confiné par capillarité dans les pores des électrodes et du séparateur. Toutefois, il est toujours possible qu'un film de mouillage subsiste sur toutes les surfaces. Aussi afin d'éviter la présence de ce film d'électrolyte à l'orifice de communication, le ou les orifices de communication sont avantageusement réalisés de la façon suivante.

On perce dans la cloison conductrice un trou d'un diamètre de l'ordre de quelques mm, par exemple 2 à 5 mm. Dans ce trou est ensuite entré en force pour être serti un cylindre, d'un diamètre très légèrement supérieur, par exemple en matière plastique inerte comme le polytétrafluoroéthylène, ou tout autre polymère stable et de préférence hydrophobe, d'épaisseur supérieure à celle de la cloison. Ce cylindre aura été préalablement percé en son centre, ou il est alors percé une fois en place, en son centre, d'un trou de petit diamètre, 0,1 à 0,5 mm par exemple, dans lequel passe un fil, avantageusement un fil d'acier. Le cylindre est ensuite écrasé sur ses deux faces en préservant sa partie centrale, cet écrasement pouvant être réalisé à chaud. Le cylindre serti dans la cloison étant en place, on retire le fil par traction, ce qui libère un orifice de diamètre correspondant. Cet orifice assure par son trou central la mise en communication des atmosphères ou environnements gazeux de deux éléments ou compartiments successifs et, par les propriétés hydrophobes du matériau plastique utilisé, en particulier le polytétrafluoroéthylène, empêche la présence d'un film continu d'électrolyte entre les deux éléments.

En variante, on peut coller sur la cloison de part et d'autre du trou un disque par exemple de polytétrafluoroéthylène ou autre matériau avantageusement hydrophobe comme indiqué ci-dessus, comportant un trou central d'un diamètre égal ou légèrement supérieur à celui de l'orifice existant dans la cloison. Il faut naturellement que le polytétrafluoroéthylène adhère fortement à la cloison ; pour ce faire, on utilise une colle stable dans les conditions de fonctionnement de la batterie, telle qu'une résine époxy.

En variante encore, on peut obturer le trou central, réalisé par exemple comme précédemment, à l'aide d'une pastille poreuse ou semi-perméable, par exemple en polytétrafluoroéthylène microporeux, collée elle aussi.

Autrement dit, le ou les orifices de communication traversant la cloison sont donc constitués d'un trou et, disposée autour du trou, d'une surépaisseur percée de part en part, rapportée sur chaque côté de la cloison, ayant une forme quelconque, par exemple annulaire ou carrée. Le trou traversant la cloison d'une part et les deux trous traversant les deux surépaisseurs en prolongement d'autre part, peuvent avoir le même diamètre, ou bien de préférence le plus petit diamètre est celui du trou traversant la cloison proprement dite.

Avantageusement, la cloison comprend également d'autres perforations situées sur son pourtour, lesquelles vont servir d'autant de points d'ancrage pour la structure isolante qui maintiendra en place les cloisons successives.

Dans cette variante, la cloison conductrice présente des perforations sur les marges constituant la bordure, perforations qui se rempliront de polymère lors du moulage ou du surmoulage de la structure isolante et seront donc noyées dans celle-ci. De cette façon, on observe un meilleur accrochage de la structure isolante polymère sur la cloison et on évite tout risque de décollement.

Le diamètre et l'espacement des perforations est calculable en fonction de la pression pouvant exister dans l'élément, de l'épaisseur de la cloison et de l'adhérence du polymère sur le matériau constitutif de la cloison. A titre indicatif, ces perforations peuvent être situées à une distance comprise entre 2 et 6 mm de chaque bord de la cloison, espacées régulièrement de 10 à 60 mm. Leur diamètre est par exemple compris entre 2 et 4 mm.

La présente invention sera mieux comprise en référence aux détails d'exécution et aux exemples qui suivent, ainsi qu'au dessins annexés, donnés tous à titre non limitatifs. Dans ces dessins :

- les figures 2 sont une vue en coupe (2a) d'un accumulateur selon l'invention, respectivement une vue frontale (2b) d'un collecteur du même accumulateur, les figures comparatives 1, étant des vues correspondantes (1a) et (1b) pour des accumulateurs traditionnels ;

- la figure 3 est l'illustration schématique d'une étape d'un procédé de fabrication selon l'invention, au niveau de l'empâtage des électrodes bipolaires ;

- la figure 4 est une vue en coupe d'une autre variante de montage de l'accumulateur selon l'invention.

- la figure 5 est une vue schématique d'ensemble, en coupe, d'une batterie d'accumulateurs selon l'invention ;

- la figure 6 représente, toujours en coupe et en détail, une forme de réalisation de l'orifice perçant la cloison conductrice de l'électrode bipolaire ;

- la figure 7 correspond à la figure 6, dans une autre forme de réalisation ;

- la figure 8 correspond à la figure 6, dans une autre forme de réalisation encore ;

- la figure 9 représente, aussi en coupe, une perforation de la cloison conductrice, prise dans la structure isolante ; et

- la figure 10 correspond à la figure 9 et représente, en plan, une cloison conductrice comprenant les perforations d'ancrage disposées sur le pourtour, avant réalisation des orifices de communication et garnissage par les matières actives constituant l'électrode positive ou négative.

Sur les figures 2, on a représenté trois unités d'un accumulateur selon l'invention comprenant des électrodes négatives 10 et des électrodes positives 20 (voir aussi figure 1) séparées alternativement par des collecteurs bipolaires 30 et des séparateurs 40. Les électrodes ont des structures tridimensionnelles. Les électrodes négatives sont en mousse de Ni empâtée avec CdO comme matière active, tandis que les électrodes positives 20 sont en mousse ou feutre de Ni empâtée avec $Ni(OH)_2$. Les collecteurs bipolaires 30 sont des feuillards en nickel ou acier nickelé sur lesquels sont plaquées les structures tridimensionnelles remplies de matières actives.

Les séparateurs 40, par exemple en non tissé comme cela est bien connu, séparent les électrodes négatives des électrodes positives. La structure extérieure est représentés par 45.

La fabrication de l'électrode bipolaire peut être effectuée suivant un des procédés décrits ci-après.

Dans un premier procédé selon l'invention, les faces du collecteur bipolaire (feuille d'acier nickelé) sont, dans une première opération, revêtues par pulvérisation d'une fine couche d'oxyde de nickel dispersée dans une solution aqueuse de méthylcellulose, à raison par exemple de 30 $g/dm^3$ environ (solution aqueuse contenant entre 1 et 10 % de méthylcellulose, par exemple 3%). La masse déposée, exprimée en masse de nickel métal est de l'ordre de 10 à 100 $g/m^2$.

La couche ainsi réalisée doit avoir, après évaporation de l'eau, une masse surfacique inférieure de préférence à 0,015 $g/cm^2$. Après cette pulvérisation, et avant tout séchage, les mousses de nickel précitées sont plaquées sur le collecteur bipolaire, puis toujours maintenues, séchées et soumises à une opération de pyrolyse par chauffage dans l'air entre 500 et 700°C pour une durée comprise entre 1 et 10 minutes.

L'ensemble peut être ensuite chauffé entre 900 et 1300 °C, par exemple entre 1000 et 1100°C pendant une durée comprise entre 1 et 10 minutes en atmosphère réductrice (par exemple azote-hydrogène provenant du craquage de $NH_3$).

A l'issue de ce traitement thermique, chaque mousse adhère bien à la feuille constituant le collecteur bipolaire, par soudage des mousses à la feuille nickelée.

Un autre procédé selon l'invention peut être adopté pour la liaison entre les collecteurs tridimensionnels et le collecteur bipolaire consistant à souder par points des feutres ou mousses allégés sur le collecteur bipolaire, Dans ces cas, on fera en sorte que les points de soudure soient disposés d'une manière homogène sur toute la surface et que la surface neutralisée par la compression due à la soudure ne dépasse pas 5 % de la surface apparente du collecteur.

La production en continu de telles électrodes bipolaires peut être conduite en adoptant par exemple la procédure décrite ci-après, qui permet de réaliser au mieux les opérations ultérieures consistant à rendre étanche chaque électrode bipolaire. En effet, l'étanchéité à l'électrolyte entre deux éléments consécutifs sera obtenue, soit par serrage d'un joint sur le pourtour de chaque face de chaque électrode bipolaire, soit par le surmoulage d'une gaine d'un polymère stable dans l'électrolyte alcalin concentré, par exemple la potasse concentrée, sur le pourtour de chaque électrode.

Dans les deux cas, cette opération implique que les deux marges des électrodes bipolaires, sur une largeur de l'ordre de 3 à 15 mm, par exemple 5 mm, soient dépourvues de matière active et aussi compactes que possible. A cette fin, dans un procédé de production en continu, trois variantes sont possibles :

- la première consiste à ce que la largeur des mousses plaquées sur la paroi bipolaire soit inférieure à la largeur de cette dernière, définissant ainsi deux bandes latérales non couvertes par la mousse. De plus, à l'issue du traitement thermique, on procède à l'écrasement transversal par presse de l'ensemble de la feuille bipolaire et des deux mousses qui y sont soudées sur une largeur égale à celles des marges laissées latéralement ; l'espacement entre ces bandes d'écrasement dépend de la dimension choisie pour les électrodes.

- une deuxième variante consiste à ne pas laisser initialement de marges latérales et à réaliser celles-ci par écrasement continu entre deux disques à l'issue du traitement thermique, l'écrasement des marges transversales étant effectué comme décrit précédemment.

- une troisième variante consiste à plaquer sur le collecteur des mousses ou feutres prédécoupés en laissant une marge non couverte sur tout leur pourtour.

L'incorporation des matières actives dans les deux collecteurs mousses peut s'effectuer par empâtage avec un mélange relativement fluide des matières actives, de telle façon que la pénétration de la pâte dans chaque mousse soit complète sans écrasement excessif des mousses.

Dans une deuxième séquence, les matières empâtées ayant été introduites, on effectue un séchage partiel des pâtes incorporées, puis une compression des deux mousses empâtées et éventuellement un séchage complémentaire. Pour des accumulateurs Ni-Cd, les forces de compression utilisées sont de préférence comprises entre 1000 et 2500 kg/cm$^2$, et entre 2000 et 4000 kg/cm$^2$ pour des accumulateurs Ni-Hydrures.

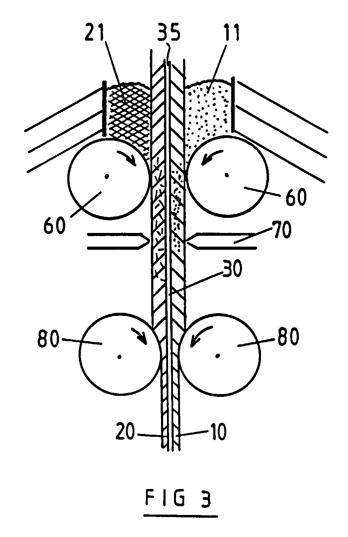

Ces opérations d'empâtage de l'électrode bipolaire pourront avantageusement être réalisées simultanément pour les deux polarités par des rouleaux et laminoirs, agissant de part et d'autre du collecteur central, comme illustré sur la figure 3.

Une feuille en nickel ou en acier nickelé 35 sur chaque face de laquelle a été préalablement plaquée une structure tridimensionnelle en mousse ou feutre de Ni selon les cas, passe à travers une double trémie d'une alimentation en matières actives, soit CdO du côté destiné à devenir l'électrode négative, respectivement Ni(OH)$_2$ du côté destiné à devenir l'électrode positive. Les matières actives, qui se présentent sous forme de pâte, remplissent les structures tridimensionnelles d'autant plus facilement qu'elles y sont forcées par une première série de rouleaux 60. A la sortie de ceux-ci se trouve un poste de séchage 70, puis l'électrode bipolaire ainsi constituée est mise dans sa forme définitive par compression à travers une deuxième série de rouleaux 80.

Une autre variante de réalisation consiste à utiliser comme collecteur tridimensionnel pour l'électrode positive un feutre de nickel. Dans ces conditions on remplit ce feutre par des moyens mécaniques soit encore par imprégnation électrochimique. Dans ce dernier cas, cette opération s'effectuant sur le feutre fixé à la paroi bipolaire, il convient d'éviter que l'imprégnation électrochimique affecte la support tridimensionnel de la négative. A cette fin, on procède à un masquage temporaire de la partie négative de l'électrode bipolaire durant la phase d'imprégnation. Cette opération de masquage peut être accomplie en continu en se servant des marges latérales du collecteur pour réaliser l'étanchéité à l'électrolyte d'une face par rapport à l'autre.

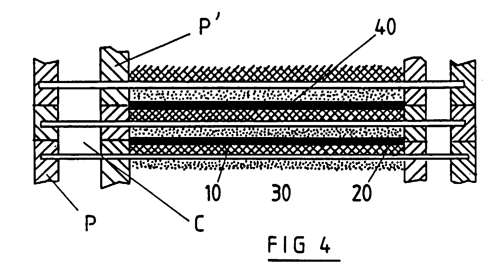

On notera enfin que le dimensionnement de la batterie, soit notamment la définition du nombre d'éléments devant constituer un bloc et les dimensions des électrodes devra être déterminé compte-tenu des conditions d'échange thermique (évacuation des calories dans les éléments centraux). Du point de vue gestion thermique, le refroidissement de la batterie pourra s'effectuer, soit à partir des deux grandes faces externes, soit aussi par les surfaces d'échanges que pourront constituer les collecteurs bipolaires, lorsqu'il est prévu leur dépassement par rapport à la ligne d'étanchéité du bloc. Dans ce cas, illustré à la figure 4, on ménage entre les éléments en polymère P assurant l'isolation électrique et constituant l'enveloppe externe du bloc, et les éléments en polymère P' identique ou différent assurant l'étanchéité entre les éléments, des canaux C, propres à la circulation d'un fluide de refroidissement. Sur cette figure, seules deux unités sont représentées, mais les chiffres de référence correspondent à ceux de la figure 2.

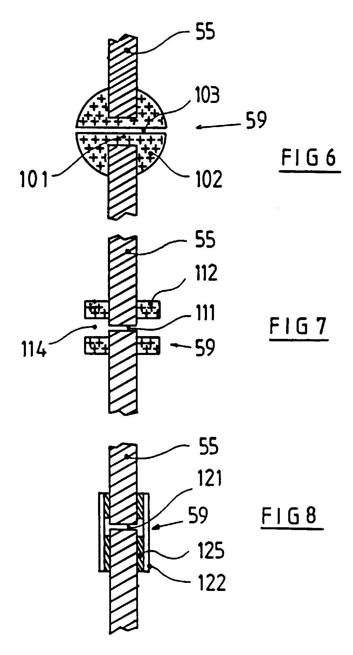

Comme on le voit maintenant sur la figure 5, la batterie d'accumulateurs 51 comprend des électrodes disposées parallèlement les unes aux autres, avec deux plaques d'extrémités 52 fermant la batterie de chaque côté. Une des plaques d'extrémités porte une électrode positive, tandis que l'autre porte une électrode négative. La batterie est fermée par une enveloppe polymère qui maintient aussi les électrodes en place, où on distingue une partie supérieure faisant office de couvercle 53 et une partie inférieure faisant office de fond 54.

Les autres électrodes, bipolaires, sont constituées d'une cloison conductrice 55 et, sur chaque face, d'une électrode positive 56 d'un côté et une électrode négative 57 de l'autre. L'électrode positive 56 contient par exemple des hydroxydes de nickel comme matières actives, et l'électrode négative de l'oxyde de cadmium comme matières actives par exemple.

En 58, on a représenté la partie de la cloison libre de matières actives, dans laquelle est schématiquement représenté un orifice 59 faisant communiquer l'environnement gazeux 60 des éléments ou compartiments consécutifs et, par récurrence, mettant en communication la totalité de l'intérieur de la batterie 51. Chaque cloison 5 5, qui fait office de collecteur des charges électriques, comprend aussi une partie 61 prise dans la structure en polymère 53,54, servant à l'isolement et au maintien. En outre, on a tracé schématiquement un jeu de deux valves de sécurité 62, sur chaque plaque d'extrémité 52.

Dans la figure 6, l'orifice de communication 59 a été réalisé en perçant d'abord la cloison 55 d'un trou 101 de sertissage pour une pièce de plastique hydrophobe 102 ayant un diamètre légèrement supérieur et initialement cylindrique. Cette pièce, si elle n'était pas déjà percée d'un trou central 103, d'un diamètre nettement plus petit, l'est une fois sertie, puis on l'écrase pour lui conférer par exemple la forme arrondie montrée sur la figure.

Sur la figure 7, l'orifice de communication est constitué du trou 111 percé dans la cloison 55 et des deux trous 114 dans le prolongement, ces derniers d'un diamètre supérieur et traversant chacun une rondelle 112 collée sur la cloison 55 de chaque côté.

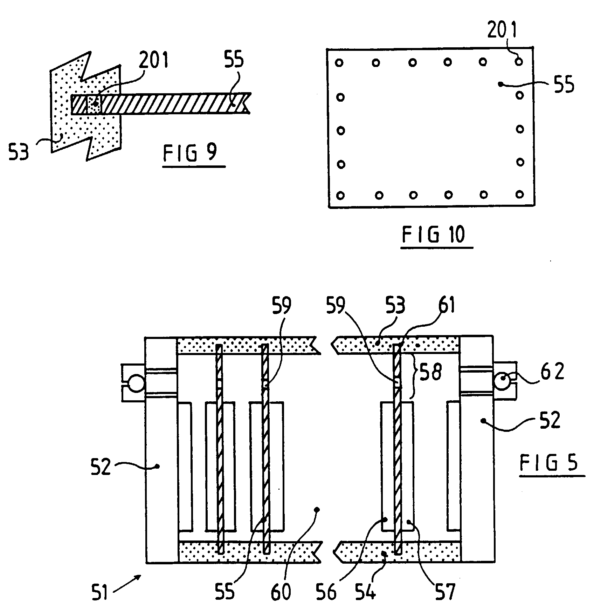

Comme on le voit sur la figure 8, le trou 121 perçant la cloison 55 est obturé par deux membranes microporeuses 122 qui sont en l'occurrence collées sur deux rondelles 125 percées, analogues aux rondelles 112 de la figure 7 et qui sont elles-mêmes collées sur la cloison autour du trou 121.

Dans les figures 9 et 10, on a représenté une cloison avant garnissage par les matières actives faisant électrodes et avant percement des orifices de communication. Cette cloison 55 comprend tout autour, en bordure, une série de perforations 201, qui vont venir se remplir de matières lors de la réalisation de la structure isolante, comme on le comprend aisément de la figure 9. Ainsi sera assuré un bon ancrage des cloisons conductrices dans la structure isolante.

Ce mode d'exécution particulier peut être appliqué à tous les types d'accumulateurs, mais on aura vite saisi qu'elle trouve un intérêt tout particulier dans la construction d'accumulateurs étanches, où les problèmes de pression interne peuvent vite devenir cruciaux.

## Exemples 1 / Exemples comparatifs

En suivant la méthode générale précédemment décrite, on réalise des électrodes bipolaires Ni-Cd ayant une surface de 1 dm$^2$.

Les mousses utilisées ont une masse surfacique de 1 g/dm$^2$ et le collecteur bipolaire est une feuille d'acier nickelé, ayant une masse surfacique de 4,5 g/dm$^2$. Il en résulte que l'ensemble des collecteurs, hors marges, a une masse de 6,5 g/dm$^2$ + 1 g/dm$^2$ (Ni de liaison), soit 7,5 g/dm$^2$, à comparer aux électrodes monopolaires réalisées avec des mousses de nickel de 6 g/dm$^2$ soit, pour deux électrodes hors têtes de plaques, une masse totale de 12 g/dm$^2$.

On constate ainsi que, pour la partie active d'un accumulateur Ni-Cd, le gain massique issu de l'emploi d'électrodes bipolaires est de 37 % sur les collecteurs.

Après compression, cette électrode bipolaire, dont la capacité surfacique est de 38 mAh/cm$^2$ pour la positive et de 57 mAh/cm$^2$ pour la négative, a une épaisseur totale de 1,85 mm. En considérant l'emploi d'un séparateur ayant, après montage, une épaisseur maximale de 0,25 mm, on constate que l'épaisseur d'un élément est donc de 2,1 mm pour une capacité utile de 38 mAh/cm$^2$ soit

$$\frac{38.10^3 \text{ Ah}}{0,21 \text{ cm}^2} = 180 \text{ Ah/dm}^3$$

Comme par ailleurs, le rendement sur la matière active de l'électrode positive est voisin de 1 et de 0,88 pour la négative , il en résulte que la masse du coeur de l'accumulateur est dans ce cas de 0,46 g/cm$^2$ soit environ 83 Ah/kg à comparer aux caractéristiques du coeur des montages Ni-Cd effectués d'une façon conventionnelle avec des électrodes mousses de 600 g/m$^2$ soit environ 72 Ah/kg, valeur correspondant à des réalisations jugées déjà très performantes. Le gain de masse sur le coeur de l'accumulateur est de l'ordre de 15 %.

De plus, pour des électrodes de grande dimension (par exemple 5 dm$^2$), on peut montrer qu'aux gains précités s'ajoute une réduction de masse due à ce que la masse des têtes de plaques et des connexions entre deux éléments pour une collecte traditionnelle est nettement supérieure à la masse représentée par la marge d'étanchéité des collecteurs bipolaires et des plaques extrêmes de la batterie.

Il en résulte en définitive, un gain de masse sur l'ensemble de la batterie compris entre 10 et 15 % ce qui permet l'obtention, pour des batteries Ni-Cd d'une énergie massique voisine de 70 Ah/kg, pour au moins 20 éléments mis en série, valeur dépendant du nombre d'éléments constituant la batterie.

De telles caractéristiques, associées à des propriétés volumiques également très supérieures à celles des batteries à collecte traditionnelle, rendent ces accumulateurs particulièrement performants pour, par exemple, les applications spatiales ou de traction pour les véhicules électriques.

## Exemples 2 / Exemples comparatifs

En suivant la méthode précédemment décrite, on réalise des électrodes bipolaires Ni-hydrures ayant une surface de 1 dm$^2$, en l'occurrence des électrodes bipolaires où l'alliage hydrurable est LaNi$_{3,55}$Al$_{0,3}$Mn$_{0,4}$Co$_{0,75}$.

Dans ces exemples 2 aussi, les mousses utilisées ont une masse surfacique de 1 g/dm$^2$ et le collecteur bipolaire est une feuille d'acier nickelé, ayant une masse surfacique de 4,5 g/dm$^2$. Il en résulte que l'ensemble des collecteurs, hors marges, a une masse de 6,5 g/dm$^2$ + 1 g/dm$^2$ (Ni de liaison), soit 7,5 g/dm$^2$, à comparer aux électrodes monopolaires réalisées avec des mousses de nickel de 6 g/dm$^2$ soit, pour deux électrodes hors têtes de plaques, une masse totale de 12 g/dm$^2$.

On constate aussi que, pour la partie active d'un accumulateur Ni-hydrures, le gain massique issu de l'emploi d'électrodes bipolaires est de 37 % sur les collecteurs.

Après compression, cette électrode bipolaire, dont la capacité surfacique est de 38 mAh/cm$^2$ pour la positive et de 57 mAh/cm$^2$ pour la négative, a une épaisseur totale de 1,55 mm. En considérant l'emploi d'un séparateur ayant, après montage, une épaisseur maximale de 0,25 mm, on constate que l'épaisseur d'un élément est donc de 1,8 mm pour une capacité utile de 38 mAh/cm$^2$ soit

$$\frac{38.10^3 \text{ Ah}}{0,18 \text{ cm}^2} = 210 \text{ Ah/dm}^3$$

Comme par ailleurs, le rendement sur la matière active de l'électrode positive est voisin de 1 et de 0,80 pour la négative , il en résulte que la masse du coeur de l'accumulateur est dans ce cas de 0,49 g/cm$^2$ soit environ

78 Ah/kg à comparer aux caractéristiques du coeur des montages Ni-hydrures effectués d'une façon conventionnelle avec des électrodes mousses de 600 g/m$^2$ soit environ 68 Ah/kg, valeur correspondant à des réalisations jugées déjà très performantes. Le gain de masse sur le coeur de l'accumulateur est de l'ordre de 15 %.

De même, pour des électrodes de grande dimension, une réduction de masse s'ajoute aux gains précités, due à ce que la masse des têtes de plaques et des connexions entre deux éléments pour une collecte traditionnelle est nettement supérieure à la masse représentée par la marge d'étanchéité des collecteurs bipolaires et des plaques extrêmes de la batterie.

Il en résulte au final, un gain de masse sur l'ensemble de la batterie compris entre 10 et 15 % ce qui permet l'obtention, pour des batteries Ni-hydrures d'une énergie massique voisine de 66 Ah/kg, pour au moins 20 éléments mis en série, valeur dépendant du nombre d'éléments constituant la batterie.

Là aussi, de telles caractéristiques, associées à des propriétés volumiques également très supérieures à celles des batteries à collecte traditionnelle, rendent ces accumulateurs particulièrement performants pour, par exemple, les applications spatiales ou de traction pour les véhicules électriques.

## Revendications

1. Electrode bipolaire pour accumulateur alcalin comportant une cloison conductrice (55) munie sur chaque face d'une matière active d'électrode, positive et respectivement négative, ladite cloison étant percée d'au moins un orifice (59) permettant la mise en communication par l'environnement gazeux des éléments assemblés en série mais ne permettant pas le passage éventuel d'électrolyte d'un élément dans l'autre, caractérisée en ce que le ou lesdits orifices (59) sont percés sur une partie (58) libre de matière active d'électrode de ladite cloison conductrice (55).

2. Electrode bipolaire selon la revendication 1, caractérisée en ce que le ou les orifices (59) traversant la cloison (55) sont constitués d'un trou (103), et disposée autour du trou, d'une surépaisseur de matériau hydrophobe (102) percée de part en part, rapportée sur chaque côté de la cloison (55).

3. Electrode bipolaire selon la revendication 2, caractérisée en ce que le trou traversant la cloison (55) d'une part et les deux trous traversant les deux surépaisseurs (102) en prolongement d'autre part, ont le même diamètre.

4. Electrode bipolaire selon la revendication 2, caractérisée en ce que le trou (111) traversant la cloison (55) est d'un diamètre plus petit que les deux trous (114) traversant en prolongement les surépaisseurs (112).

5. Electrode bipolaire selon l'une quelconque des revendications 1 à 4, caractérisée en ce que les orifices (59) sont au nombre de un à quatre.

6. Electrode bipolaire selon l'une quelconque des revendications 1 à 5, caractérisée en ce que le diamètre des orifices (59) est compris entre 0,1 et 0,5 mm.

7. Electrode bipolaire selon l'une quelconques des revendications 1 à 6, caractérisée en ce que la cloison conductrice (55) comprend une feuille en nickel ou en acier nickelé dont l'épaisseur est comprise entre 20 et 200 micromètres.

8. Electrode bipolaire selon l'une quelconque des revendications 1 à 7, caractérisée en ce que les matières actives sont contenues dans des structures tridimensionnelles métalliques, notamment des mousses de nickel qui ont, avant leur remplissage par les matières actives, une épaisseur comprise entre 0,5 et 5 mm, leur masse surfacique étant comprise entre 20 et 300 g/m$^2$.

9. Procédé de fabrication d'une électrode bipolaire selon la revendication 1, caractérisé en ce qu'on perce dans la cloison conductrice (55) au moins un trou (101) dans lequel on sertit un cylindre (102) en matériau hydrophobe, puis qu'on perce le centre du cylindre d'un trou (103) dans lequel on passe un fil, qu'on écrase le cylindre (102) serti sur ses deux faces en préservant sa partie centrale et qu'enfin on retire le fil.

10. Procédé de fabrication d'une électrode bipolaire selon la revendication 1, caractérisé en ce qu'on perce au moins un trou (111) dans la cloison conductrice (5), qu'on colle sur la cloison (55) de part et d'autre du trou (111) un disque en matériau hydrophobe (112) comportant un trou central (114) d'un diamètre égal ou légèrement supérieur à celui du trou (111) traversant la cloison.

11. Procédé de fabrication d'une électrode bipolaire selon la revendication 10, caractérisé en ce qu'on obture le trou en y collant de part et d'autre une pastille poreuse ou semi-perméable (122).

## Patentansprüche

1. Bipolare Elektrode für einen Alkali-Akkumulator mit einer leitenden Zwischenwand (55), die auf jeder Seite mit einem aktiven positiven bzw, negativen Elektrodenmaterial versehen ist und von wenigstens einer Öffnung (59) durchsetzt ist, die es gestattet, die in Serie angeordneten Elemente über die gasförmige Umgebung zu verbinden, jedoch nicht den eventuellen Durchtritt des Elektrolyten vom einen Element zum anderen zuläßt, dadurch gekennzeichnet, daß die Öffnung oder Öffnungen (59) in einem von dem aktiven Elektrodenmaterial freien Bereich (58) der leitenden Zwischenwand (55) ausgebildet sind.

2. Bipolare Elektroden nach Anspruch 1, dadurch gekennzeichnet, daß die Öffnung oder Öffnungen (59), die die Zwischenwand (55) durchsetzen, durch ein Loch (103) gebildet werden, um das herum auf jeder Seite der Zwischenwand (55) angesetzt eine durchgehend durchbrochene Überdicke eines hydrophoben Materials (102) angeordnet ist.

3. Bipolare Elektroden nach Anspruch 2, dadurch gekennzeichnet, daß das die Zwischenwand (55) durchsetzende Loch einerseits und die beiden Löcher, die in Verlängerung die beiden Überdicken (102) durchqueren, andererseits denselben Durchmesser haben.

4. Bipolare Elektroden nach Anspruch 2, dadurch gekennzeichnet, daß das durch die Zwischenwand (55) gehende Loch (111) einen kleineren Durchmesser hat als die beiden Löcher (114), die in Verlängerung die Überdicken (112) durchqueren.

5. Bipolare Elektroden nach einem der Ansprüche 1 bis 4, dadurch gekennzeichnet, daß die Anzahl der Öffnungen (59) eins bis vier beträgt.

6. Bipolare Elektroden nach einem der Ansprüche 1 bis 5, dadurch gekennzeichnet, daß der Durchmesser der Öffnungen (59) zwischen 0,1 und 0,5 mm beträgt.

7. Bipolare Elektroden nach einem der Ansprüche 1 bis 6, dadurch gekennzeichnet, daß die leitende Zwischenwand (55) eine Folie aus Nickel oder vernickeltem Stahl aufweist, deren Dicke zwischen 20 und 200 Mikrometer beträgt.

8. Bipolare Elektrode nach einem der Ansprüche 1 bis 7, dadurch gekennzeichnet, daß die aktiven Materialien in dreidimensionalen metallischen Strukturen, insbesondere Schaumstrukturen aus Nickel enthalten sind, die vor ihrer Füllung mit den aktiven Materialien eine Dicke zwischen 0,5 und 5 mm haben und deren flächenbezogene Masse zwischen 20 und 300 g/m² liegt.

9. Verfahren zur Herstellung einer bipolaren Elektrode nach Anspruch 1, dadurch gekennzeichnet, daß man in der leitenden Zwischenwand (55) wenigstens ein Loch (101) ausbildet, in das man einen Zylinder (102) aus hydrophobem Material einpreßt, daß man weiterhin das Zentrum des Zylinders mit einem Loch (103) versieht, durch das man eine Faser hindurchführt, daß man den an seinen beiden Stirnflächen gebördelten Zylinder (102) unter Erhaltung seines mittleren Bereichs staucht und schließlich die Faser herauszieht.

10. Verfahren zur Herstellung einer bipolaren Elektrode nach Anspruch 1, dadurch gekennzeichnet, daß man wenigstens ein Loch (111) in der leitenden Zwischenwand (5) ausbildet, daß man auf die Zwischenwand (55) beiderseits des Loches (111) eine Scheibe aus hydrophobem Material (112) aufklebt, die ein zentrales Loch (114) aufweist, dessen Durchmesser gleich oder etwas größer als derjenige des durch die Zwischenwand gehenden Loches (111) ist.

11. Verfahren zur Herstellung einer bipolaren Elektrode nach Anspruch 10, dadurch gekennzeichnet, daß man das Loch verschließt, indem man dort auf beiden Seiten ein poröses oder semipermeables Plättchen (122) anklebt.

## Claims

1. Bipolar electrode for an alkaline accumulator comprising a conductive partition (55) equipped on each face with an active electrode material, positive and negative respectively, the said partition being pierced by at least one opening (59) allowing communication of the elements assembled in series via the gaseous environment but not allowing the passage of electrolyte from one element to the other, characterized in that the said opening or openings (59) are made on a part (58) of the said conductive partition (55) free from active electrode material.

2. Bipolar electrode according to claim 1, characterized in that the opening or openings (59) through the partition (55) consist of a hole (103) and arranged around the hole an extra thickness of hydrophobic material (102) pierced through and arranged on each side of the partition (55).

3. Bipolar electrode according to claim 2, characterized in that the hole through the partition (55) on one side and the two holes through the two extension extra thicknesses (102) on the other have the same diameters.

4. Bipolar electrode according to claim 2, characterized in that the hole (111) through the partition (55) has a smaller diameter than the two holes (114) through the extension extra thicknesses (112).

5. Bipolar electrode according to any of claims 1 to 4, characterized in that the openings (59) are from one to four in number.

6. Bipolar electrode according to any of claims 1 to 5, characterized in that the diameter of the openings (59) is between 0.1 and 0.5 mm.

7. Bipolar electrode according to any of claims 1 to 6, characterized in that the conductive partition (55) comprises a nickel or nickel-coated steel plate, the thickness of which is between 20 and 200 micrometres.

8. Bipolar electrode according to any of claims 1 to 7, characterized in that the active material is contained in three-dimensional metallic structures, in particular nickel foams which, before being filled with the active material, have a thickness of between 0.5 and 5 mm, their surface density being between 20 and 300 g/m$^2$.

9. Process for production of a bipolar electrode according to claim 1, characterized in that in the conductive partition (55) is pierced at least one hole (101) in which is crimped a cylinder (102) of hydrophobic material, then in the centre of the cylinder is pierced a hole (103) through which is passed a wire, then the cylinder (102) is crushed to be crimped on its two faces while preserving its centre part, and finally the wire is withdrawn.

10. Process for production of a bipolar electrode according to claim 1, characterized in that at least one hole (111) is pierced in the conductive partition (5), that onto the partition (55) on either side of the hole (111) is affixed a disc of hydrophobic material (112) comprising a central hole (114) of diameter equal to or slightly larger than that of the hole (111) through the partition.

11. Process for production of a bipolar electrode according to claim 10, characterized in that the hole is sealed by affixing to either side a porous or semipermeable tablet (122).

FIG 1

FIG 2

FIG 3

FIG 4

FIG 6

FIG 7

FIG 8

FIG 9

FIG 10

FIG 5